# EUROPEAN PATENT SPECIFICATION

(11) **EP 1 532 860 B1**
(45) Date of publication and mention of the grant of the patent: **12.09.2007**
(21) Application number: 04257107.5
(22) Date of filing: 16.11.2004
(51) Int. Cl.: A01F 29/00

(54) **Agricultural shredding apparatus**
Landwirtschafltiche Zerkleinerungsmaschine
Déchiqueteuse agricole

(30) Priority: 19.11.2003 GB 0326931; 21.11.2003 GB 0327039
(43) Date of publication of application: 25.05.2005
(73) Proprietor: Kverneland ASA, 4344 Kvernaland (NO)
(72) Inventor: Mehaffy, David John, DK-5000 Odense C (DK)
(74) Representative: Raynor, Simon Mark

(56) References cited:
- EP-A- 0 121 751
- EP-A- 0 384 791
- FR-A- 2 802 767

## Description

This invention relates to a shredding apparatus for chopping/shredding an agricultural crop load which includes stalkey material, such as straw or silage, and which comprises a platform for supporting the crop load, a shredder device which is rotatable about an axis which is generally parallel to the surface of the platform, means for advancing the crop load to the shredder device, and means for discharging crop which has been shredded by the shedder device.

Drum type chopper/shredder devices are well known for use in chopping/shredding crop material, such as straw or silage, into smaller portions and then discharging such portions to a required place of use, e.g. onto a stable floor as bedding/litter for farm animals, or into a feeding trough for consumption by farm animals.

Typically, crop material of this type is stored for future use in the form of cylindrical or rectangular cross section bales, and which include lengths of stalk randomly packed into the bale. In the case of silage in particular, there remains a relatively high water content, (compared with straw or hay) and the shredding/chopping of slippery/greasy stalk material can be difficult, and can give rise to clogging or blocking of the shredder device, and its cutting/shredding components e.g. knives and scraper blades, and of any discharge passage from the shredder device to the discharge outlet.

It is known from US 3540506 to provide a cutting drum with a retainer comb. The cutting blades are staggered in their attachment to the drum by means of spacers to a circular ring. A comb is placed in the plane of the ring in order to retain any uncut material.

A similar design of retainer comb and ring can be found in WO/0147345. In this design, the cutting blades are attached as pairs onto a circular ring.

A disadvantage of both known designs is that there is risk of material building up between the ring and the comb, because the outer surface of the ring is constantly in the same position relative to the comb. Any material which becomes collected in this area will not be able to be released. A disadvantage of the second design is that the cutting blades consume double cutting power, by virtue of the way in which they are arranged.

Another known design with a cutting ring is shown in EPO384791, in which the cutting elements are in the plane of the comb, and vice-versa. The disadvantage of this known design is that the cutting elements are working below the comb elements, and this does not give a good cutting performance, compared with an arrangement in which the cutting knives are placed alongside the retaining comb elements.

Another known design with a retainer comb and circular ring is known from EP0755181, in which a smooth circular ring is provided without cutting knives. A disadvantage with this arrangement is the build-up of material between the comb and the outer surface of the ring, and also the absence of any cutting arrangement. However, none of the prior art documents disclose a shredding device in which axial movement of the shredded material takes place.

It has also known from FR-A-2802767 to provide a shredding apparatus for chopping/shredding a load of agricultural crop, and which comprises a platform for supporting the crop load, a rotor 4 which rotates about an axis generally parallel to the surface of the platform and taking the form of a generally cylindrical drum carrying axially spaced shredding rings, means for advancing the crop load to the rotor, and means for discharging crop material shredded by the apparatus. Each shredding ring projects outwardly of the surface of the cylindrical drum and lies in a generally radial plane, and has opposed side faces which engage the crop. The radially outer edges of the side faces of each shredding ring carry pairs of blades spaced apart around the periphery of each ring, and with the blades in each pair projecting upwardly and outwardly away from the general plane of each ring.

The present invention has therefore been developed preliminary with a view to provide a shredding apparatus having a rotatable shredder device with improved means for preventing stalkey crop material from clogging up the shredder device during operation, and in particular to provide a rotor which is not sensitive to blockage and gives a good and continuous distribution of all kinds of material at low power consumption with a stable and simple design.

According to the invention there is provided a shredding apparatus for chopping/shredding a load of agricultural crop which includes stalkey material, such as straw or silage, and which comprises:
a platform (11) for supporting the crop load (12);
a shredder device (13) which is rotatable about an axis which is generally parallel to the surface of the platform (11), said device comprising a generally cylindrical drum (16) carrying axially spaced shredding rings (14), and in which each ring (14) projects outwardly of the surface of the drum (16) and lies in a generally radial plane having opposed side faces (14a, 14b), and has cutting or chopping blades or knives (15) spaced apart circumferentially of its periphery;
means for advancing the crop load (11) to the shredder device (13); and
means for discharging crop material shredded by the shredder device (13):
characterised in that at least some of the radially outer edge regions of the side faces (14a, 14b) undulate circumferentially of the face so as to project axially of the generally radial plane of the shredding ring (14) and thereby exert an axial guiding force on the crop (12).

Preferred features of the invention are set out in dependant Claims 2 to 14.

Advantages of preferred embodiments include:
The ring is more stiff due to the deformation/bending of the ring;
The knives could be straight, so easier to produce;
Cleaning effect: obstruction between tip of the comb and the ring will be removed when the opposing sides of the ring move away from the comb.

No material build up between two adjacent rings because of the axial movement of crop by the undulating surfaces.

Knife is preferably only on one side of the comb; less power consumption, easier attachment of the knife, easier access to the knife.

The knives are under an angle with the comb so there is less risk of hitting the comb. The axial shaking of the material to be cut due to the undulating lateral faces of the ring gives a more continuous distribution.

Weaving effect of the material to be cut due to the bending of the ring; lateral movement/shaking of the material in the lateral sense, better distribution.

Preferred embodiments of agricultural shredding apparatus according to the invention will now be described in detail, by way of example only, with reference to the accompanying drawings, in which:
Figure 1 is a side view of first embodiment of towable apparatus having a single shredding drum;
Figure 2 is a rear view of the apparatus of Figure 1.
Figure 3 is a detail view showing the co-operation between the knives on a rotary shredder device and corresponding combing elements of a comb co-operative therewith to strip/clean the surface of the drum;
Figure 4 is a detail view of a shredding blade;
Figure 5 is a view, similar to Figure 1, of a second embodiment, having a tandem arrangement of shredder devices, arranged one above the other;
Figure 6 is a rear view of the apparatus of Figure 5;
Figure 7 is a detail of the tandem shredder drum arrangement of Figures 5 and 6;
Figure 8 is a detail of the shredder blades;
Figure 9 is an enlarged and perspective illustration of a rotary shredder drum for use in shredder apparatus according to the invention.
Figure 10 is a side view showing co-operation between a combing element and the shredder knives on one of the shredding rings spaced apart axially of the drum shown in Figure 9;
Figure 11 is a detail view, to an enlarged scale, showing co-operation between a shredder knife on the shredding ring and a combing element, and also co-operation with a corresponding scraper element mounted on the periphery of the drum; and

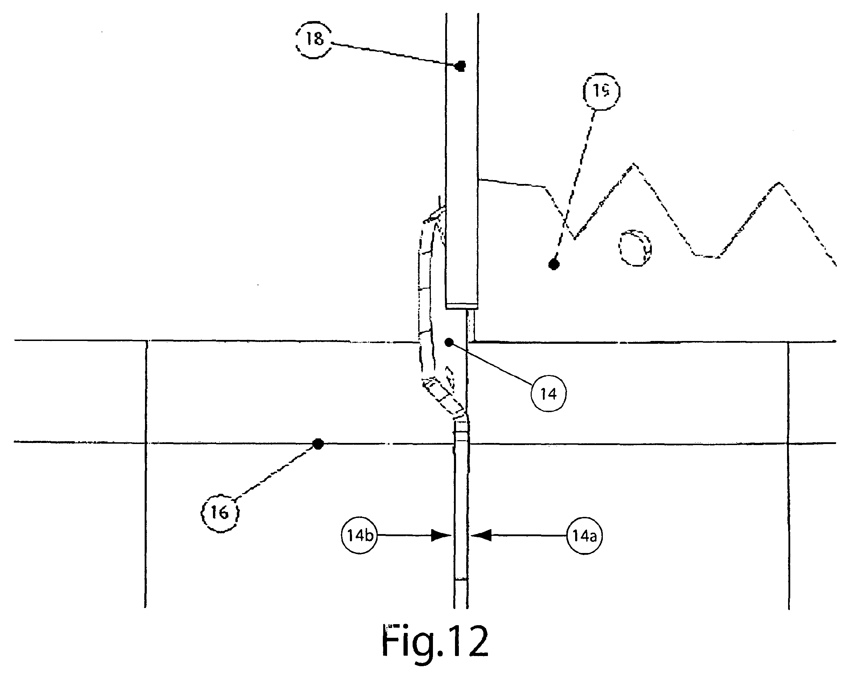

Figure 12 is a view similar to Figure 11, but in which no knives/blades are provided.

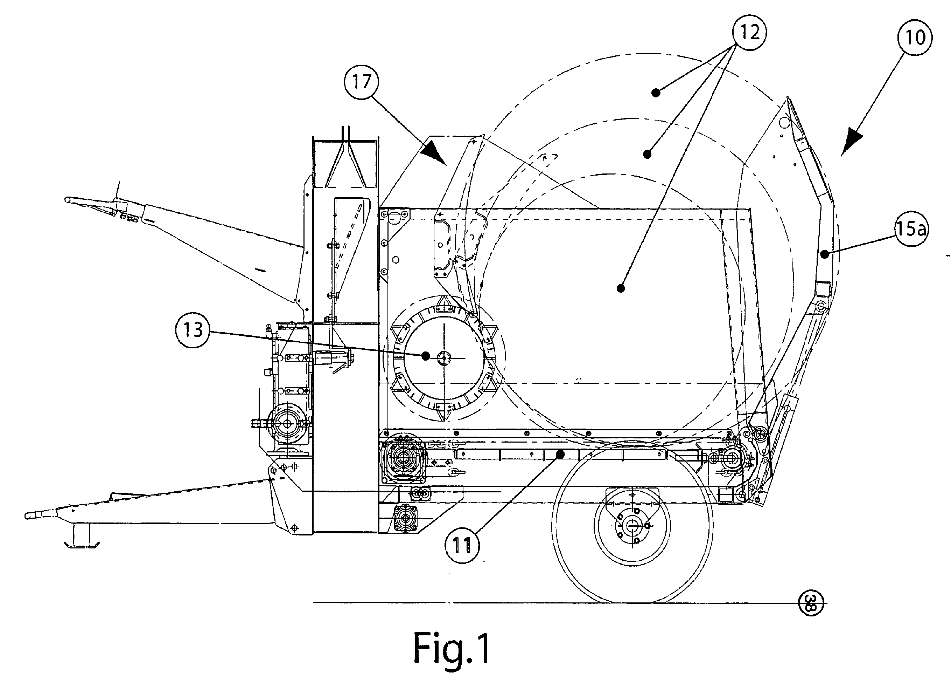

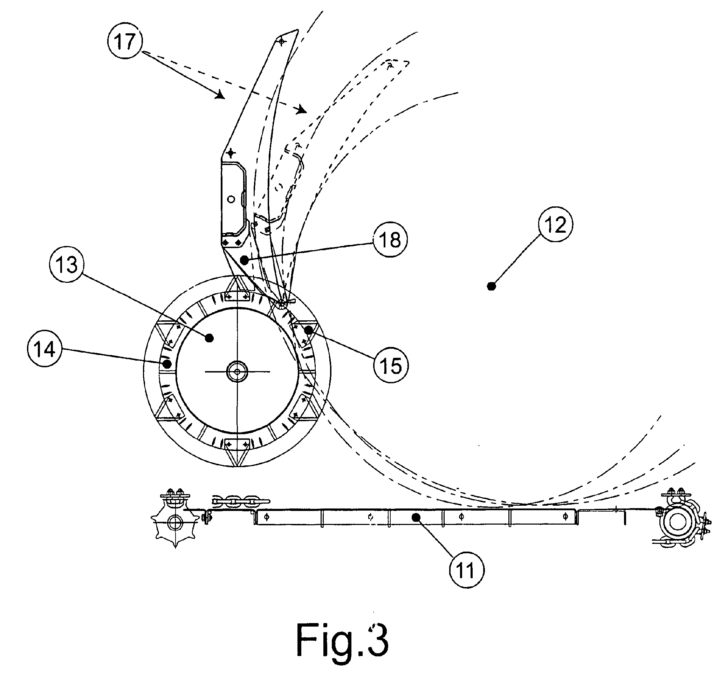

Referring now to Figures 1 to 4 of the drawings, a first embodiment of shredding apparatus according to the invention is designated generally by reference 10 and is intended to chop/shred a load 12 of agricultural crop which includes stalkey material, such as straw or silage.

The apparatus 10 comprises a platform 11 for supporting a crop load, which in the illustrated embodiment comprises a compressed and cylindrical bale 12 of straw or silage.

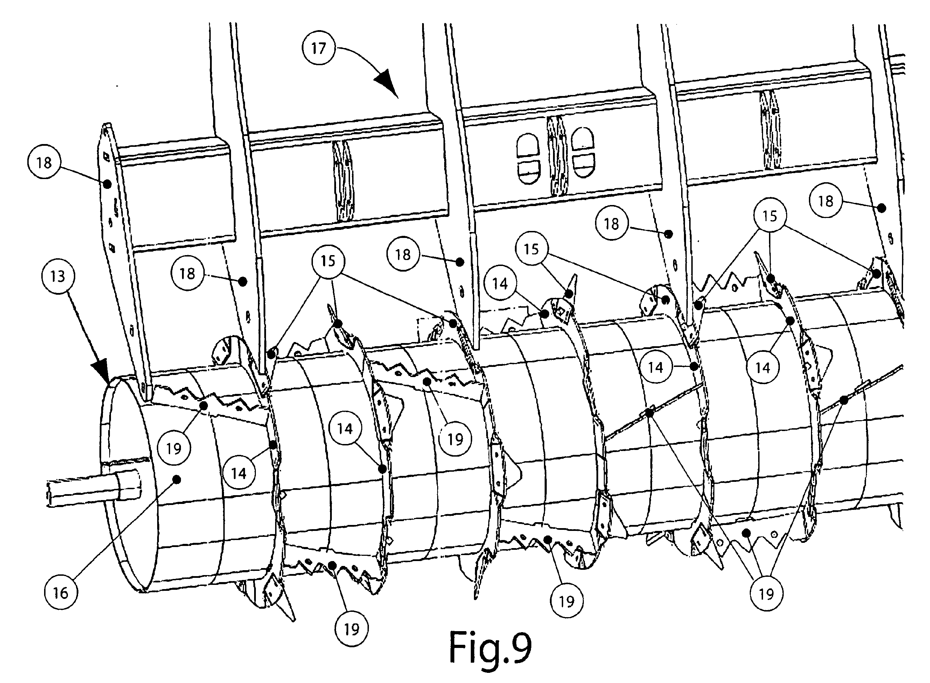

A shredder device 13, in the form of a cylindrical drum 16, is rotatable about a generally horizontal axis which extends generally parallel to the surface of a platform 11, and which comprises a cylindrical drum carrying axially spaced shredding rings 14 (see Figure 9) and each having circumferentially spaced shredder knives or blades 15. Each ring 14 projects outwardly of the cylindrical surface of drum 16, and is located in a generally radial plane.

The load platform 11 preferably takes the form of an endless moveable conveyor belt or chain, and which therefore also serves to convey the load 12 towards the shredder device 13.

The apparatus is also provided with means for discharging crop material which has been shredded by the shredder device (not shown in detail), and which may comprise a discharge duct having a discharge outlet, and a fan arranged to blow shredded material from the shredder device to the discharge outlet. The discharge outlet may discharge the shredded material onto the floor of a stable, when the material is to be used as bedding or litter. Alternatively, in the case of shredded material to be used as food, the discharge outlet may be arranged to discharge the shredded material into a feeding trough for farm animals.

To load the crop material onto the platform 11, a loading tailgate 15a may be operated. It should be understood that, while Figure 1 shows a cylindrical bale 12 forming the load of crop material, the apparatus 10 may be used to shred and chop materials derived from other shapes of bale, e.g. bale of rectangular cross-section, or indeed crop material supplied in loose form.

Referring now in particular to Figure 9, it can be seen that each shredding ring 14 projects outwardly of the surface of a cylindrical drum 16, and preferably a cleaning/stripping comb, designated generally by reference 17, is arranged to co-operate with the shredding drum 16. The comb 17 has individual combing elements 18 each arranged to co-operate with a respective shredding ring 14, and with at least one of the knives 15 of each co-operating ring 14 being moveable along one side of the respective combing element 18, and at least one of the other knives being moveable along the opposite side of the element 18 during rotation of the drum 16. It should be understood that the comb 17 is an optional feature, and is not essential to the invention.

It will be noted that, in the illustrated arrangement, an intermediate ring 14 is arranged between each pair of combing elements 18, and which does not co-operate with a combing element. Furthermore, obliquely extending scraper bars 19 extend between each adjacent pair of axially spaced shredding rings 14, and scrape off chopped material and assist the discharge of the material.

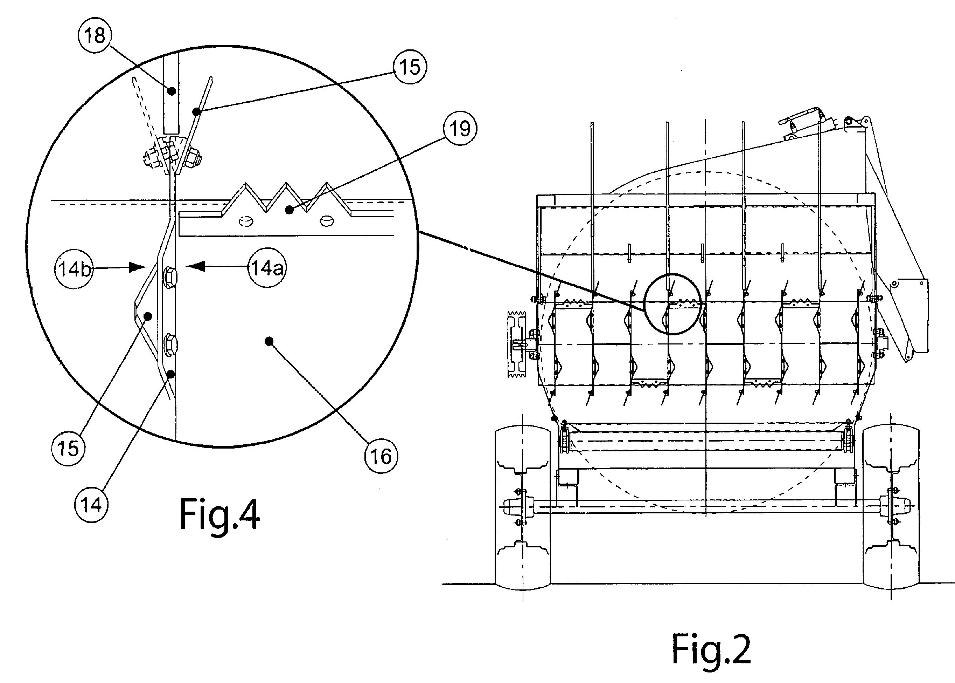

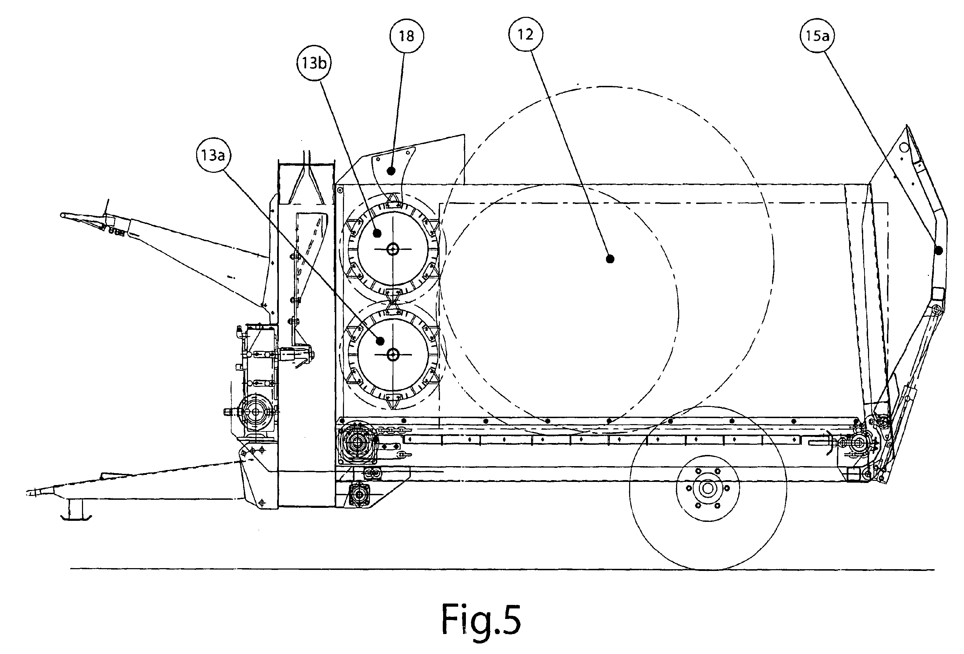

To assist in the dislodgement of any clogged material (which may arise owing to the nature of the crop material being treated, which in the case of silage has slippery, stalkey material), at least part of each shredding ring 14 is deformed laterally with respect to the general radial plane of each ring to assist the combing/cutting action between the co-operating knives 15 and combing elements 18. This can be seen in particular in Figures 2 and 4, in which the opposed side faces 14a, 14b (or at least the radially outer edge regions of the faces 14a, 14b) form undulating guide surfaces (in a direction circumferentially of the rings 14), which therefore project axially of the general radial plane of the ring to a greater or lesser extent, and preferably in successively opposite directions. By this arrangement, each shredder ring 14 co-operates with its respective combing element 18 (when provided) so as to exert an axial guiding force on the crop (as it engages the device 13) to move individual portions of the crop load (instantaneously present between each adjacent pair of shredding rings 14) laterally relative to the combing element and thereby minimise the risk of jamming or clogging the shredder device. Also, it loosens the material by axial shaking movement, and assists in uniform discharge of chopped material.

When, as is preferred, knives 15 are provided on the rings 14, this further assists de-clogging of the apparatus.

It should be noted that each side face 14a, 14b of a shredding ring 14 is deformed laterally (axially) of the generally radial plane containing the ring at least once per revolution of the ring, and preferably up to four or more deformations per revolutions. Also, the axial deformations are in successively opposite directions when viewed along the circumference of each ring.

Each ring 14 may include arcuate portions extending generally in a radial plane, and intermediate ring portions which are deformed laterally, so that the knives 15 lie in planes extending laterally outwardly of the radial plane of the ring, and also laterally outwardly of the plane of the combing element 18 with which they co-operate.

Alternatively, each ring 14 may have an inner annular portion which is adjacent the cylindrical surface of the drum 16 (and is contained in a radial plane), and an outer annular portion which is deformed laterally of the radial plane so as to form the required undulating side guide faces 14a, 14b.

Figures 2, 3 and 4 show in more detail the co-operation between the combing elements and the shredder rings, and in particular show how a "weaving" type of action may be generated.

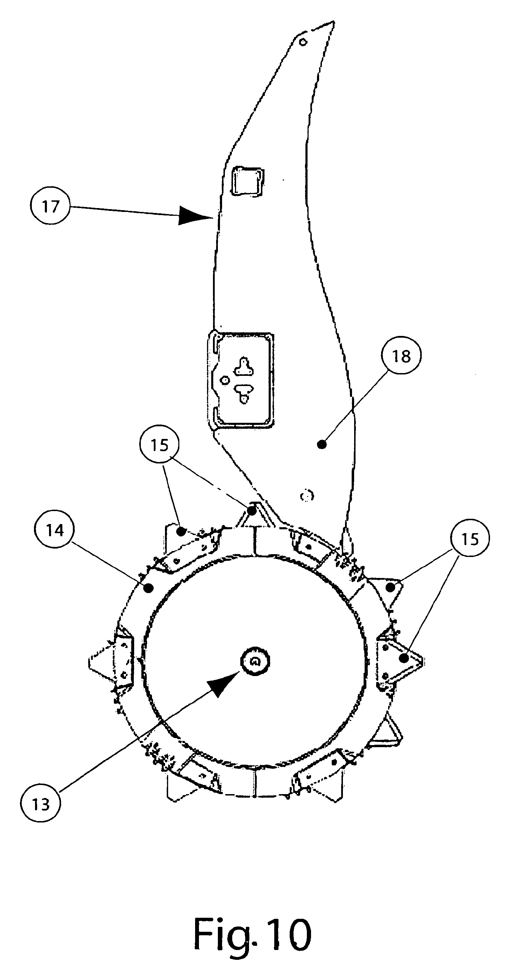

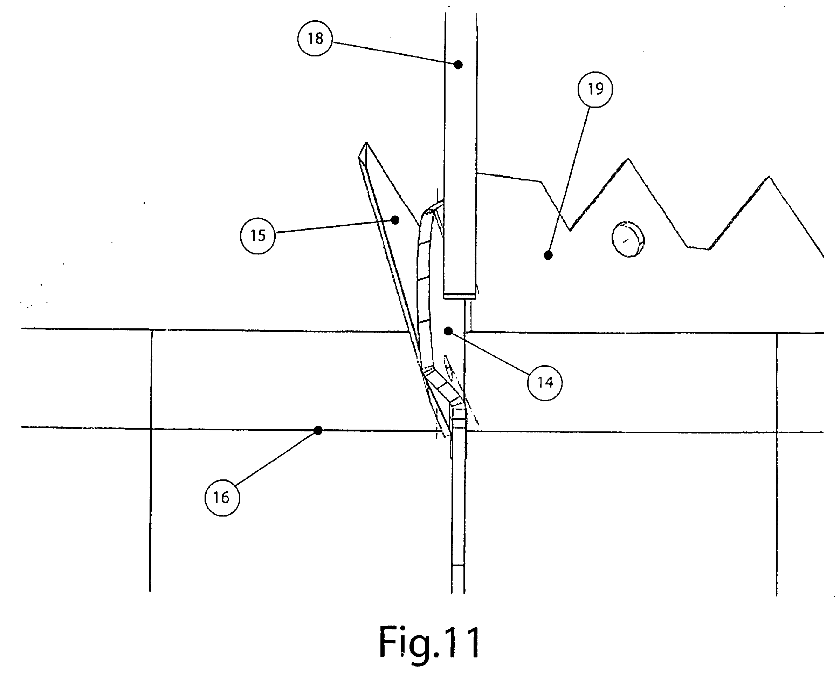

Figures 10 and 11 show in more detail, the co-operation between the combing elements and the cutting or chopping blades of the shredder rings.

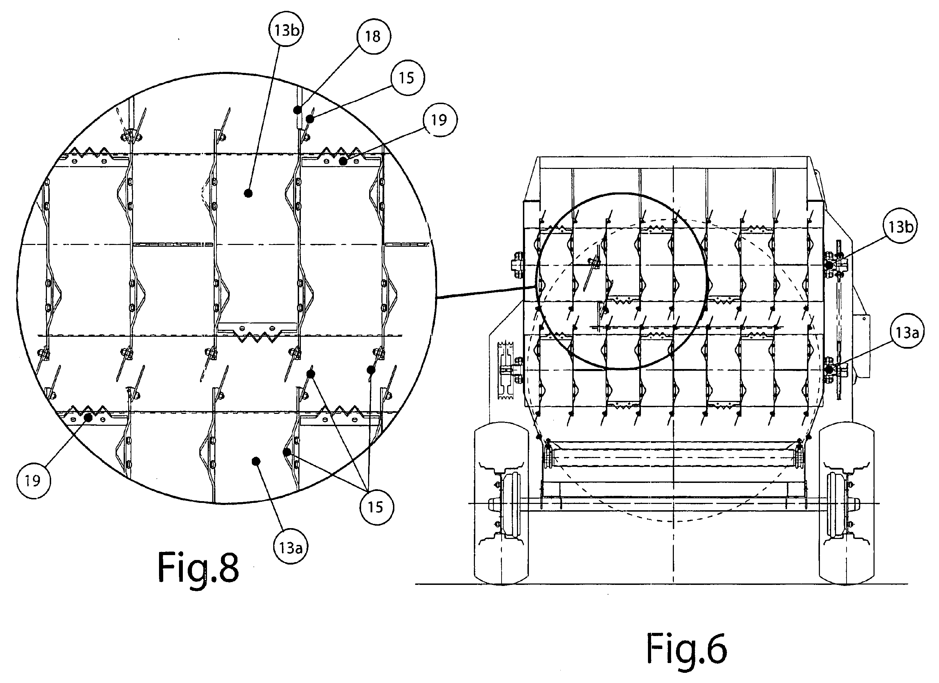

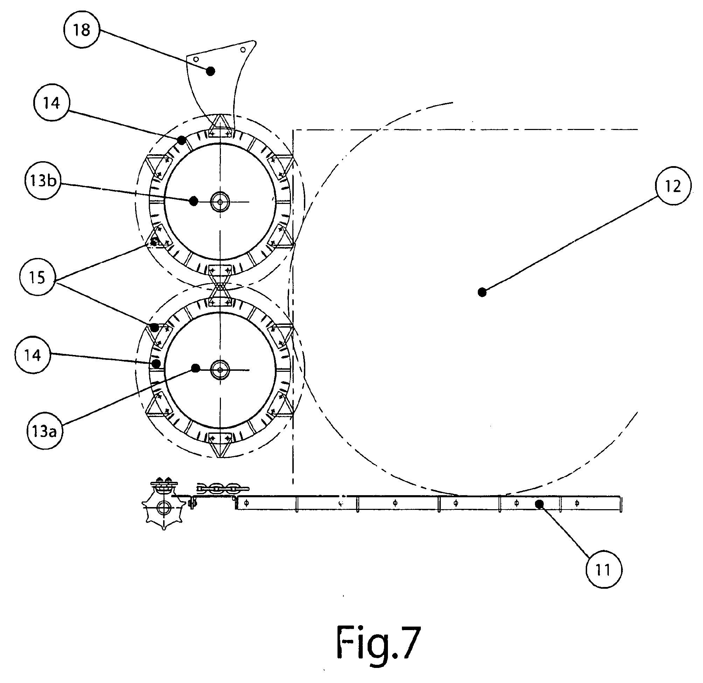

Figures 5 to 8 show views, corresponding to Figures 1 to 4, of a second embodiment to the invention, in which a dual or tandem arrangement of rotary shredder devices 13a, 13b is provided, arranged one above the other. The shredding rings 14 of the upper and lower shredder devices 13a, 13b co-operate with each other, and a comb 17 co-operates with the uppermost device 13b only. Otherwise, the constructional and operation details are generally similar.

## Claims

1. A shredding apparatus (10) for chopping/shredding a load (12) of agricultural crop which includes stalkey material, such as straw or silage, and which comprises:
a platform (11) for supporting the crop load (12);
a shredder device (13) which is rotatable about an axis which is generally parallel to the surface of the platform (11), said device comprising a generally cylindrical drum (16) carrying axially spaced shredding rings (14), and in which each ring (14) projects outwardly of the surface of the drum (16) and lies in a generally radial plane having opposed side faces (14a, 14b), and has cutting or chopping blades or knives (15) spaced apart circumferentially of its periphery;
means for advancing the crop load (11) to the shredder device (13); and
means for discharging crop material shredded by the shredder device (13):
**characterised in that** at least some of the radially outer edge regions of the side faces (14a, 14b) undulate circumferentially of the face so as to project axially of the generally radial plane of the shredding ring (14) and thereby exert an axial guiding force on the crop (12).

2. Apparatus according to claim 1, in which the side faces (14a, 14b) of each shredding ring (14) project axially of the general plane of the ring in successively opposite directions when viewed along the circumference of the ring.

3. Apparatus according to claim 1, in which each shredding ring (14) includes arcuate portions extending generally in a radial plane, and intermediate ring portions which are deformed laterally of the general radial plane of the ring.

4. Apparatus according to claim 1, in which each shedding ring (14) has an inner annular portion which is adjacent to the cylindrical surface of the drum (16) and which is contained in the general radial plane of the ring, and an outer annular portion which is deformed laterally of the radial plane to provide said undulating outer edge regions of the guide faces (14a, 14b).

5. Apparatus according to any one of the preceding claims, in which a cleaning/stripping comb (17) is arranged to co-operate with the shredding drum (16), said comb (17) having individual combing elements (18) each arranged to co-operate with a respective shredding ring (14).

6. Apparatus according to Claim 5, in which at least some of the shredding rings (14) have circumferentially spaced shredder knives (15), and in which the co-operation between each combing element (18) and the knives (15) of the respective shredding ring (14) is such that at least one shredder knife (15) on the shredding ring (14) is moveable along one side of the respective combing element (18) and at least one other shredding knife (14) on the shredding ring (15) is moveable along the opposite side of the respective combing element (18) during rotation of the drum (16).

7. Apparatus according to Claims 5 or 6, in which each combing element (18) is substantially co-planar with the general radial plane of the respective shredder ring (14), and the undulating edge regions of the side faces (14a, 14b) of the ring (14) extend away from the plane of each combing element 18.

8. Apparatus according to any one of the preceding claims, in which each side face (14a), (14b) has at least one axial deformation throughout its circumferential extent, and preferably at least four axial deformations.

9. Apparatus according to any one of Claims 1 to 4, in which each shredding ring (14) has cutting or chopping blades or knives (15) arranged at staggered locations circumferentially of the ring.

10. Apparatus according to Claim 9, in which the knives (15) of each shredding ring (14) are moveable along both sides of a respective combing element (18) of a cleaning/stripping comb (17) co-operating with the cylindrical drum (16).

11. Apparatus according to Claim 9 or 10, in which the knives (15) extend at an angle to a plane perpendicular to the axis of rotation of the drum (16).

12. Apparatus according to Claim 9, in which the undulation of a side face (14a), (14b) of a shredding ring (14) provides a basis for the angle under which the knife (15) is placed.

13. Apparatus according to any one of the preceding claims, in which first and second cylindrical drums (16) are arranged one above the other.

14. Apparatus according to claim 13 when appendant to claim 5, in which the comb (17) is arranged to co-operate with the uppermost one of the drums (16).

## Patentansprüche

1. Schreddergerät (10) zum Zerkleinern/Schreddern einer Ladung (12) einer landwirtschaftlichen Masse, die stängelhaltiges Material, etwa Stroh oder Silage, die Folgendes aufweist:
eine Bühne (11) zum Tragen der Massenladung (12),
eine Schreddervorrichtung (13), die um eine Achse drehbar ist, die allgemein parallel zur Fläche der Bühne (11) liegt, wobei die Vorrichtung eine allgemein zylindrische Trommel (16) umfasst, die axial beabstandet angeordnete Schredderringe (14) trägt, und wobei jeder Ring (14) von der Fläche der Trommel (16) nach außen vorsteht und in einer allgemein radialen Ebene mit gegenüberliegenden Seitenflächen (14a, 14b) liegt und mit Schneide- oder Zerkleinerungsklingen oder -Messern (15) ausgestattet ist, die umfänglich ihrer Peripherie beabstandet sind.
Mittel zum Vorschieben der Massenladung (11) zur Schreddervorrichtung (13), und
Mittel zum Entladen der von der Schreddervorrichtung (13) geschredderten Massenladung,
**dadurch gekennzeichnet, dass** mindestens einige der radial äußeren Kantenbereiche der Seitenflächen (14a, 14b) umfänglich der Fläche wellenförmig verlaufen, um axial zur allgemein radialen Ebene des Schredderrings (14) vorzustehen und dadurch eine axial führende Kraft auf die Masse (12) aufzubringen.

2. Vorrichtung nach Anspruch 1, wobei die Seitenflächen (14a, 14b) jedes Schredderrings (14) axial von der allgemeinen Ebene des Rings, entlang des Umfangs des Rings gesehen, in nacheinanderfolgend entgegengesetzten Richtungen vorstehen.

3. Vorrichtung nach Anspruch 1, wobei jeder Schredderring (14) gebogene Abschnitte, die sich allgemein in einer radialen Ebene erstrecken, und Zwischenringabschnitte enthält, die seitlich von der allgemein radialen Ebene des Rings abweichen.

4. Vorrichtung nach Anspruch 1, wobei jeder Schredderring (14) mit einem inneren ringförmigen Abschnitt, der neben der zylindrischen Fläche der Trommel (16) liegt und der in der allgemein radialen Ebene des Rings enthalten ist, und einem äußeren ringförmigen Abschnitt ausgestattet ist, der seitlich von der radialen Ebene abweicht, um die wellenförmig verlaufenden äußeren Kantenbereiche der Führungsflächen (14a, 14b) bereitzustellen.

5. Vorrichtung nach einem der vorhergehenden Ansprüche, wobei ein Reinigungs-/Abstreifrechen (17) so angeordnet ist, dass er mit der Schreddertrommel (16) zusammenwirkt, wobei der Rechen (17) mit einzelnen Rechenelementen (18) ausgestattet ist, die jeweils so angeordnet sind, dass sie mit einem jeweiligen Schredderring (14) zusammenwirken.

6. Vorrichtung nach Anspruch 5, wobei mindestens einige der Schredderringe (14) mit umfänglich beabstandeten Schreddermessern (15) ausgestattet sind, und wobei das Zusammenwirken zwischen jedem Rechenelement (18) und den Messern (15) des jeweiligen Schredderrings (14) so erfolgt, dass mindestens ein Schreddermesser (15) auf dem Schredderring (14) entlang einer Seite des jeweiligen Rechenelementes (18) beweglich ist und mindestens ein anderes Schreddermesser (14) auf dem Schredderring (15) entlang der gegenüberliegenden Seite des jeweiligen Rechenelementes (18) während der Rotation der Trommel (16) beweglich ist.

7. Vorrichtung nach Anspruch 5 oder 6, wobei jedes Rechenelement (18) im Wesentlichen koplanar zur allgemein radialen Ebene des jeweiligen Schredderrings (14) liegt und sich die wellenförmig verlaufenden Kantenbereiche der Seitenflächen (14a, 14b) des Rings (14) von der Ebene jedes Rechenelementes 18 weg erstrecken.

8. Vorrichtung nach einem der vorhergehenden Ansprüche, wobei jede Seitenfläche (14a),(14b) mit mindestens einer axialen Abweichung über ihre umfängliche Erstreckung und vorzugsweise mit vier axialen Abweichungen ausgestattet ist.

9. Vorrichtung nach einem der Ansprüche 1 bis 4, wobei jeder Schredderring (14) mit Schneide- oder Zerkleinerungsklingen oder -messern (15) ausgestattet ist, die an versetzten Stellen um den Umfang des Ringes angeordnet sind.

10. Vorrichtung nach Anspruch 9, wobei die Messer (15) jedes Schredderrings (14) entlang beider Seiten eines jeweiligen Rechenelementes (18) eines Reinigung-/Abstreifrechens (17) beweglich sind, der mit der zylindrischen Trommel (16) zusammenwirkt.

11. Vorrichtung nach Anspruch 9 oder 10, wobei sich die Messer (15) in einem Winkel zu einer Ebene senkrecht zur Rotationsachse der Trommel (16) erstrecken.

12. Vorrichtung nach Anspruch 9, wobei die Wellenform einer Seitenfläche (14a),(14b) eines Schredderrings (14) eine Basis für den Winkel herstellt, unter dem das Messer (15) angeordnet ist.

13. Vorrichtung nach einem der vorhergehenden Ansprüche, wobei eine erste und eine zweite zylindrische Trommel (16) übereinander angeordnet sind.

14. Vorrichtung nach Anspruch 13, soweit abhängig von Anspruch 5, wobei der Rechen (17) so angeordnet ist, dass er mit der obersten Trommel (16) zusammenwirkt.

## Revendications

1. Appareil de déchiquetage (10) pour couper/déchiqueter une charge (12) de récolte agricole qui comporte un matériau à tige, comme de la paille ou du fourrage, et qui comporte :
une plate-forme (11) pour sup porter la charge de récolte (12),
un dispositif déchiqueteur (13) qui peut tourner autour d'un axe qui est généralement parallèle à la surface de la plate-forme (11), ledit dispositif comportant un tambour généralement cylindrique (16) portant des anneaux de déchiquetage espacés axialement (14), et dans lequel chaque anneau (14) fait saillie vers l'extérieur de la surface du tambour (16) et s'étend dans un plan généralement radial ayant des faces latérales opposées (14a, 14b), et a des lames coupantes ou lames de découpe (15) espacées sur la circonférence de sa périphérie,
des moyens pour faire avancer la charge de récolte (11) vers le dispositif déchiqueteur (13), et
des moyens pour évacuer le matériau de récolte déchiqueté par le dispositif déchiqueteur (13),
**caractérisé en ce qu'**au moins certaines des zones de bord radialement extérieures des faces latérales (14a, 14b) ondulent circonférentiellement par rapport à la face de manière à faire saillie axialement à partir du plan généralement radial de l'anneau de déchiquetage (14), et à exercer ainsi une force de guidage axiale sur la récolte (12).

2. Appareil selon la revendication 1, dans lequel les faces latérales (14a, 14b) de chaque anneau de déchiquetage (14) font saillie axialement par rapport au plan général de l'anneau dans des directions successivement opposées lorsqu'elles sont vues le long de la circonférence de l'anneau.

3. Appareil selon la revendication 1, dans lequel chaque anneau de déchiquetage (14) comporte des parties en arc s'étendant généralement dans un plan radial, et des parties d'anneau intermédiaires qui sont déformées latéralement par rapport au plan radial général de l'anneau.

4. Appareil selon la revendication 1, dans lequel chaque anneau de déchiquetage (14) a une partie annulaire intérieure qui est adjacente à la surface cylindrique du tambour (16) et qui est contenue dans le plan radial général de l'anneau, et une partie annulaire extérieure qui est déformée latéralement par rapport au plan radial pour fournir lesdites zones de bord extérieures ondulantes des faces de guidage (14a, 14b).

5. Appareil selon l'une quelconque des revendications précédentes, dans lequel un peigne de nettoyage/dénudation (17) est agencé pour coopérer avec le tambour de déchiquetage (16), ledit peigne (17) ayant des éléments de peignage individuels (18) agencés chacun pour coopérer avec un anneau de déchiquetage respectif (14).

6. Appareil selon la revendication 5, dans lequel au moins certain des anneaux de déchiquetage (14) ont des lames de déchiqueteur espacées circonférentiellement (15), et dans lequel la coopération entre chaque élément de peignage (18) et les lames (15) de l'anneau de déchiquetage respectif (14) est telle qu'au moins une lame de déchiqueteur (15) sur l'anneau de déchiquetage (14) est mobile le long d'un côté de l'élément de peignage respectif (18), et au moins une autre lame de déchiquetage (14) sur l'anneau de déchiquetage (15) est mobile le long du côté opposé de l'élément de peignage respectif (18) pendant une rotation du tambour (16).

7. Appareil selon la revendication 5 ou 6, dans lequel chaque élément de peignage (18) est sensiblement coplanaire avec le plan radial général de l'anneau de déchiqueteur respectif (14), et les zones de bord ondulantes des faces latérales (14a, 14b) de l'anneau (14) s'étendent loin du plan de chaque élément de peignage (18).

8. Appareil selon l'une quelconque des revendications précédentes, dans lequel chaque face latérale (14a, 14b) a au moins une déformation axiale d'un bout à l'autre de son étendue circonférentielle, et de préférence au moins quatre déformations axiales.

9. Appareil selon l'une quelconque des revendications 1 à 4, dans lequel chaque anneau de déchiquetage (14) a des lames coupantes ou lames de découpe (15) agencées en des emplacements étagés circonférentiellement sur l'anneau.

10. Appareil selon la revendication 9, dans lequel les lames (15) de chaque anneau de déchiquetage (14) sont mobiles le long des deux côtés d'un élément de peignage respectif (18) d'un peigne de nettoyage/dénudation (17) coopérant avec le tambour cylindrique (16).

11. Appareil selon la revendication 9 ou 10, dans lequel les lames (15) s'étendent suivant un angle par rapport à un plan perpendiculaire à l'axe de rotation du tambour (16).

12. Appareil selon la revendication 9, dans lequel l'ondulation d'une face latérale (14a, 14b) d'un anneau de déchiquetage (14) fournit une base pour l'angle sous lequel la lame (15) est placée.

13. Appareil selon l'une quelconque des revendications précédentes, dans lequel des premier et second tambours cylindriques (16) sont agencés l'un au-dessus de l'autre.

14. Appareil selon la revendication 13 lorsque dépendante de la revendication 5, dans lequel le peigne (17) est agencé pour coopérer avec le plus supérieur des tambours (16).
